# EUROPEAN PATENT APPLICATION

(11) **EP 1 837 953 A1**
(43) Date of publication of application: **26.09.2007**
(21) Application number: 05816587.9
(22) Date of filing: 12.12.2005
(51) Int. Cl.: H01R 12/16

(54) **CARD CONNECTOR**

(30) Priority: 13.01.2005 JP 2005005946
(71) Applicant: Tyco Electronics AMP K.K., Kawasaki-shi, Kanagawa 213-8535 (JP)
(72) Inventor: TSUJI, Junya, c/o Tyco Electronics AMP K.K., Kawasaki-shi, Kanagawa 213-8535 (JP)
(74) Representative: Townsend, Stephen
(86) International application number: PCT/JP2005/023192
(87) International publication number: WO 2006/075479

(57) **Abstract**

A compact card connector with a reduced thickness. The connector includes: a contact (4), an insulative housing (2) for holding the contact (4); and a push-push cam mechanism (18) provided in the housing (2) and driven along insertion-removal directions of a card by a push operation of the card. The cam mechanism (18) includes a slider (26) having a lock spring (40) for locking a card inserted into the housing (2) and a cam groove (38). The housing (2) includes a positioning member (28) swingably provided in the housing (2) and engaging in the cam groove (38) to perform positioning of the slider (26) according to the push operation of the card. The slider (26) lies within substantially the same plane as the card, and the lock spring (40) is disposed adjacent to the cam groove (38) to guide the positioning member (28).

## Description

### Technical Field

The present invention relates to a card connector, and more specifically, to a card connector having a push-push cam mechanism capable of holding a card in a usable or ejectable position by a push operation of the card.

### Background Art

Various types of card connectors for use with personal computers, digital cameras, and the like are known. As an example of such connectors, a card connector that includes an insulative housing having a terminal, a metal shell mounted on the housing and defining a card receiving space with a top plate and a pair of side plates hanging from both edges of the top plate, and a heart cam groove provided along a lower portion of one of the sides of the card receiving space is known as described, for example, in Japanese Unexamined Patent Publication No. 2004-327149 (Figures 1 and 14).

As another prior art, a connector device for memory card that includes a contact block having a heart cam groove on one end thereof, a slider that moves within the connector body in the forward-backward directions, and a lock metal having a lock piece that engages in the guide groove of the heart cam groove is known as described, for example, in Japanese Unexamined Patent Publication No. 2004-207168 (Figure 1).

As still another prior art, a card connector that includes a housing having a contact held therein and a heart-shaped cam groove, and a slider provided in the housing such that it slides along the card insertion-removal directions is known as described, for example, In Japanese Unexamined Patent Publication No. 2001-291553 (Figures 6, 8, and 11).

Recently, card connectors for use with cell phones other than the applications described above, which may detachably hold a card for recording downloaded music or an image obtained by a cell phone camera, are demanded. A cell phone, however, includes many electrical and electronic parts, so that it is necessary to make the card connector extremely compact and thin in order to be incorporated in the cell phone. In the card connector disclosed in Japanese Unexamined Patent Publication No. 2004-327149, the heart cam groove is provided on the surface of the cam slider which is orthogonal to the principal surface of the card. Likewise, in the connector device disclosed in Japanese Unexamined Patent Publication No. 2004-207168, the heart cam groove is provided on the surface of the contact block (housing) which is orthogonal to the principal surface of the card. These heart cam groove and heart cam groove section have a ring shape and requires a certain width. Accordingly, these connectors have a problem that the size in the height direction inevitably becomes significant although the size in the width direction of the connector, i.e., the width direction of the card may be reduced.

In the mean time, in the card connector disclosed in Japanese Unexamined Patent Publication No. 2001-291553, the heart-shaped cam groove is provided on the surface of the housing (slider mounting section) which is parallel with the principal surface of the card, and the slider is formed so as to slide on the housing. The cam groove is formed in a shape such that the size of the connector in the width direction is reduced. In order to form the cam groove, however, the slider mounting section of the housing requires a certain thickness, and the thickness of the slider is added thereto, so that, in total, the thickness of the connector becomes significant.

The present invention has been developed in view of the circumstances described above, and it is an object of the present invention to provide a compact card connector with a reduced thickness.

### Disclosure of the Invention

The card connector of the present invention is a card connector including: a contact; an insulative housing for holding the contact; and a push-push cam mechanism provided in the housing and driven along insertion-removal directions of a card by a push operation of the card,
wherein: the cam mechanism includes a slider having a lock spring for locking a card inserted into the housing and a cam groove; and the housing includes a positioning member swingably provided in the housing and engaging in the cam groove to perform positioning of the slider according to the push operation of the card, and
wherein: the slider lies within substantially the same plane as the card; and the lock spring is disposed adjacent to the cam groove to guide the positioning member.

As one embodiment of the present invention, the lock spring may have a plate-like shape and include a lock protrusion for locking the card at a free end portion thereof; a fixing end portion of the lock spring may be fixed to the slider; and a planar surface of the lock spring may adjacently face a portion of the cam groove.

A configuration may be adopted in which the card connector of the present invention further includes a shell that substantially covers the housing and cam mechanism, the shell having, on a principal surface thereof corresponding to the cam mechanism, a slot extending in the insertion-removal directions of the card, and the lock spring includes a lock protrusion that engages with the slot to control movement of the free end portion when the slider is pushed into the housing and the card is placed at a usable position.

Preferably, the cam groove has a heart shape, and the planar surface of the lock spring is disposed along a portion of the heart-shaped cam groove that forms an angle with the insertion-removal directions of the card.

According to the card connector of the present invention, the push-push cam mechanism includes a slider having a lock spring for locking a card and a cam groove, and a positioning member for performing positioning of the slider according to a push operation of the card. The slider lies within the same plane as the card, and the lock spring is disposed adjacent to the cam groove to guide the positioning member, so that the width of the cam mechanism may be reduced. Further, the cam groove is provided on the slider itself which lies within the same plane as the card, so that the card connector may be made compact with a thin thickness.

Further, if the lock spring has a plate-like shape and includes a lock protrusion for locking the card at a free end portion thereof, a fixing end portion of the lock spring is fixed to the slider, and a planar surface of the lock spring adjacently faces a portion of the cam groove, then the positioning member may move appropriately within the cam groove even if the groove has a small depth, so that the thickness of the slider may further be reduced, and thereby the card connector may be made thinner.

If a configuration is adopted in which the card connector further includes a shell that substantially covers the housing and cam mechanism, the shell having, on a principal surface thereof corresponding to the cam mechanism, a slot extending in the insertion-removal directions of the card, and the lock spring includes a lock protrusion that engages with the slot to control movement of the free end portion when the slider is pushed into the housing and the card is placed at a usable position, then the lock spring is prevented from deforming, so that the card is securely connected to the card connector in its operation state.

### Brief Description of the Drawings

Figure 1A is a plan view of a card connector which is an example of the present invention.
Figure 1B is a front view of the card connector illustrated in Figure 1A.
Figure 2A is a rear view of the card connector illustrated in Figure 1A.
Figure 2B is a bottom view of the card connector illustrated in Figure 1A.
Figure 3A is a right side view of the card connector illustrated in Figure 1A.
Figure 3B is a left side view of the card connector illustrated in Figure 1A.
Figure 4 is a plan view of the card connector illustrated in Figure 1A with the shell being removed, illustrating the housing thereof.
Figure 5 is a partial cross-sectional view of the card connector taken along the line 5-5 in Figure 1A.
Figure 6A is a left side view of a slider used in the card connector illustrated in Figure 1A.
Figure 6B is a plan view of the slider used in the card connector illustrated in Figure 1A.
Figure 6C is a right side view of the slider used in the card connector illustrated in Figure 1A.
Figure 7A is a front view of the slider illustrated in Figure 6A.
Figure 7B is a rear view of the slider illustrated in Figure 6A.
Figure 7C is a bottom view of the slider illustrated in Figure 6A.
Figure 8 is a partial cross-sectional view of the slider taken along the line 8-8 in Figure 6B.
Figure 9A is a plan view of a lock spring used in the card connector.
Figure 9B is a side view of the lock spring used in the card connector.
Figure 10A is a plan view of a cam groove of the slider.
Figure 10B is a development view of the cam groove of the slider.
Figure 11A is a plan view of the card connector with the shell being removed illustrating a state in which a card is inserted into the card connector, and the card and lock spring are provisionally engaged with each other.
Figure 11B is a plan view of the card connector with the shell being removed, illustrating a state in which the card is inserted all the way into the card connector.
Figure 11C is a plan view of the card connector with the shell being removed, illustrating a state in which a finger is removed from the inserted card and the card is usable.
Figure 12A is a plan view of the card connector with the shell being removed, illustrating a state in which the card in the usable state is pushed again by a finger.
Figure 12B is a plan view of the card connector with the shell being removed, illustrating that the card is pushed back to a position where the card is allowed to be pulled out.

### Best Mode for Carrying Out the Invention

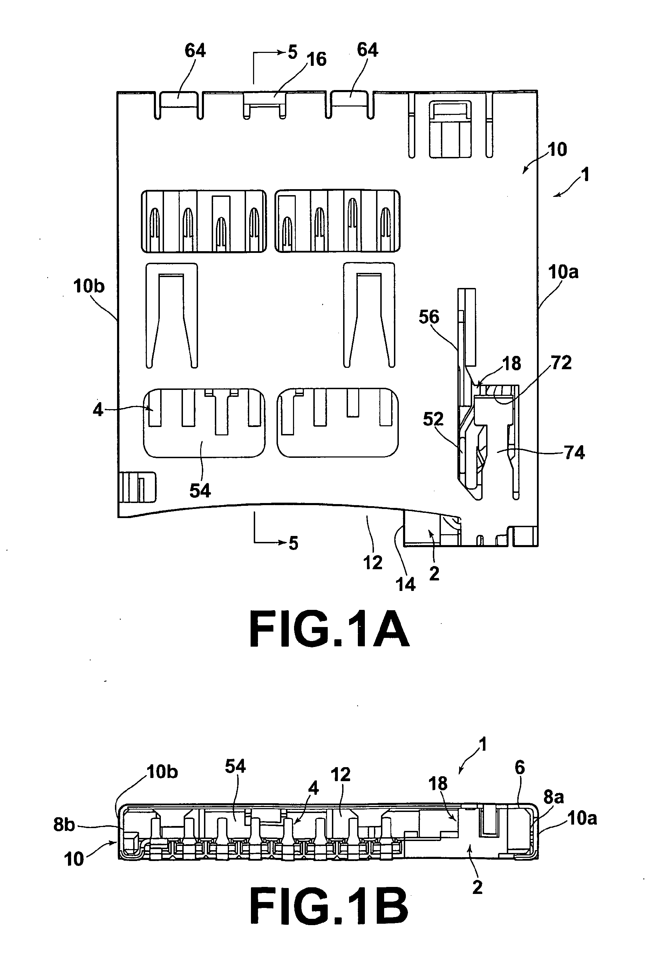

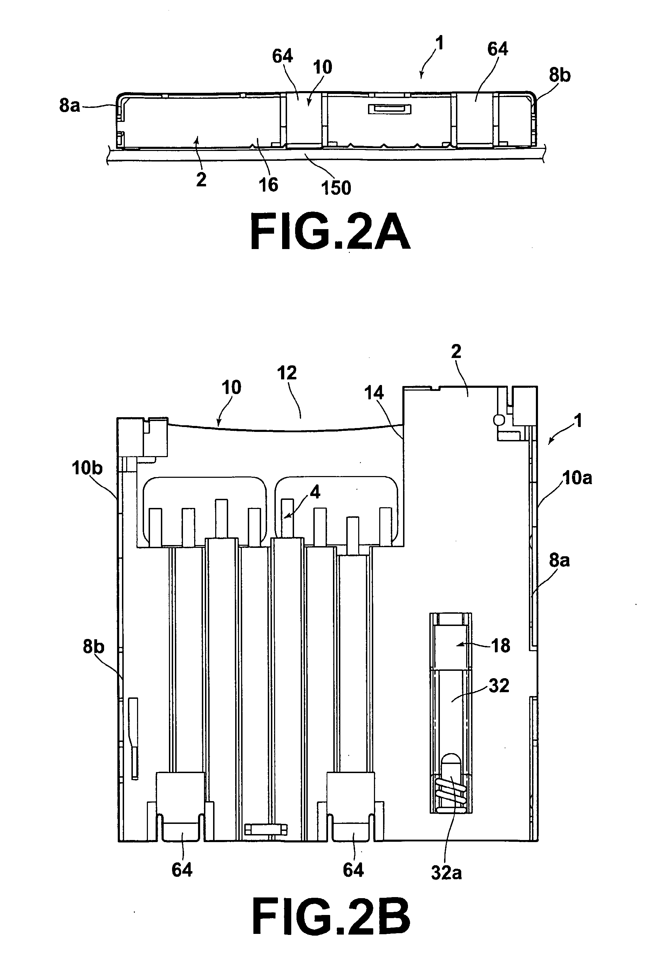

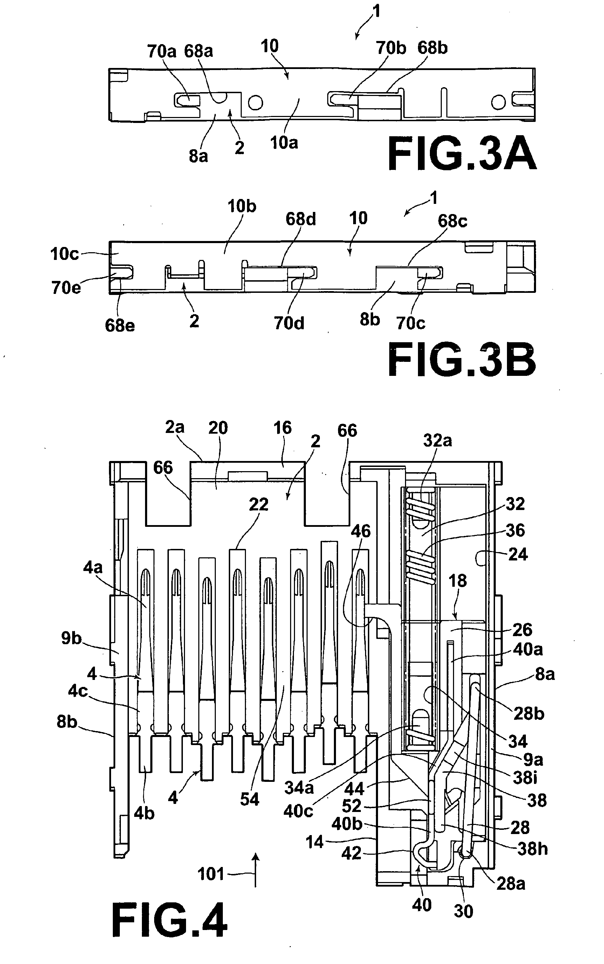

Hereinafter, an exemplary embodiment of the card connector of the present invention will be described with reference to the accompanying drawings. Figures 1 to 3 illustrate a card connector 1, in which Figures 1A and 1B are plan view and front view respectively, and Figures 2A, 2B, 3A, and 3B are rear view, bottom view, right side view, and left side view respectively. The card connector 1 includes: an insulative housing 2; contacts 4 held by the housing 2; and a metal shell 10 covering the upper face 6, side faces 8a, 8b of the housing 2.

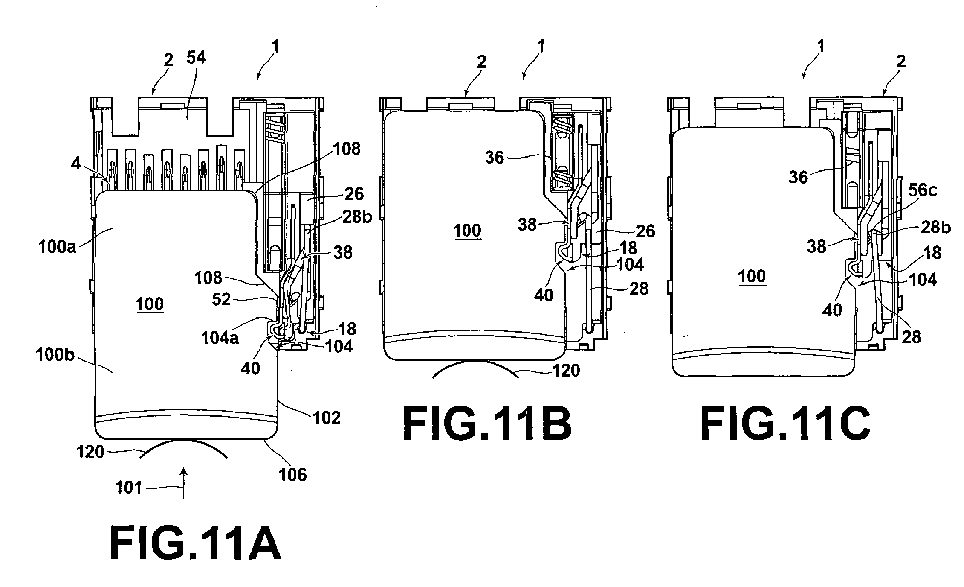

First, the shape of the housing 2 will be described with reference to Figure 4, as well as Figures 1 to 3. Figure 4 is a plan view of the housing 2 with the shell being removed. The housing 2 has substantially a rectangular planar shape, and includes side walls 9a, 9b, a rear wall 16, a bottom wall 20, and a cam mechanism 18 on the side wall 9a. The area enclosed by the side wall 9b, rear wall 16, bottom wall 20, and cam mechanism 18 forms a card receiving section 54 (Figures 1A, 1B, and 4). The housing 2 has a rectangular notch 14 on the side of a card insertion slot 12 (Figures 1A, 1B). The cam mechanism 18 on the right side has a relatively wide width, while the side wall 9b on the left side has a relatively thin width as illustrated in Figure 4. The notch 14 is formed so as to open toward the front side between the side wall 9b and cam mechanism 18. The referent of "front side" as used herein means a side from where a card 100 (Figures 11A to 12B) is inserted, and referent of "right and left" means right and left respectively on a plan view of the card connector, as illustrated in Figure 1A or 4. A plurality of contact insertion grooves 22 extending backward from the notch 14 are provided on the interior face of the bottom wall 20, i.e. on the bottom face. The plurality of contact insertion grooves 22 is formed in parallel along the insertion direction 101 (Figure 4) of the card 100. Each contact insertion groove 22 includes therein a single contact 4. Further, two notches 66 are formed on the rear end 2a (Figure 4) of the housing 2.

The shell 10 mounted on the housing 2 constructed in the manner as described above is formed of a single metal plate through punching and folding. The shell 10 includes side walls 10a, 10b that substantially cover the side walls 9a, 9b of the housing 2 respectively, and an attachment piece 64 which is folded at the two notches 66 of the housing 2. When the card connector 1 is attached to a substrate 150 (Figure 2A), the attachment piece 64 is soldered to the substrate 150. The side walls 10a, 10b of the shell 10 have L-shaped notches 68a, 68b, and 68c, 68d respectively as illustrated in Figures 3A, 3B. The side faces 8a, 8b of the housing 2 have protrusions 70a, 70b, and 70c, 70d respectively, which correspond to the notches 68a, 68b, 68c, and 68d respectively. Note that the notches 68a, 68b, 68c, and 68d are collectively called as the notch 68, and protrusions 70a, 70b, 70c, and 70d are collectively called as the protrusion 70. The protrusion 70 and notch 68 engage with each other to prevent the shell 10 from moving upward and rearward. As illustrated in Figure 3B, the shell 10 has a notch 68e, which is open toward the rear side, at the rear end 10c of the side wall 10b, which engages with a corresponding protrusion 70e of the housing 2 and prevents the shell 10 from sliding out in the rear direction.

Further, the shell 10 has an opening 72 at a position corresponding to the cam mechanism 18, as illustrated in Figure 1A. The opening 72 includes an elastic tongue 74 extending backward from the front edge of the opening 72 and biased toward inside of the shell 10 (rearward in Figure 1A) . Further, a slot 56 extending backward following the opening 74 is formed. The elastic tongue 74 and slot 56 operate in cooperation with the cam mechanism 18, the details of which will be described later.

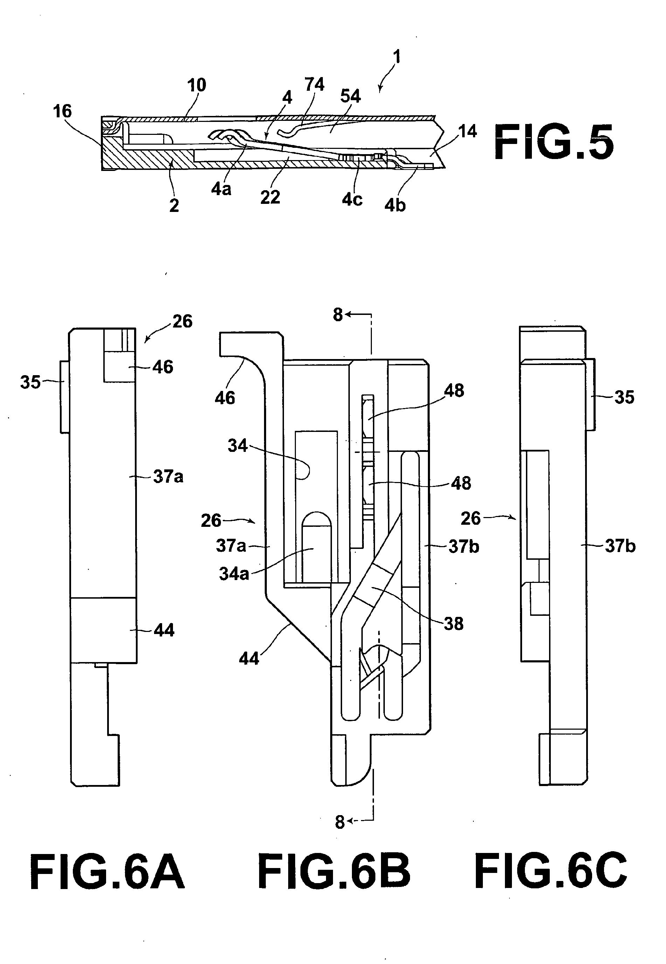

Next, the mounting state of the contacts 4 in the housing 2 will be described with reference also to Figure 5. Figure 5 is a partial cross-sectional view taken along the line 5-5 in Figure 1A. A press fitting section 4c of each contact 4 is press-fitted in each contact insertion groove 22, and thereby each contact 4 is fixed to the housing 2. Each contact 4 includes a contact segment 4a located in rear portion of the housing 2, and a tine 4b soldered to the substrate 150 (Figure 2A) is protruding into the notch 14. The contact segment 4a is inclined and located in the card receiving section 54. Figure 5 clearly shows that the elastic tongue 74 is biased toward the inside of the shell 10.

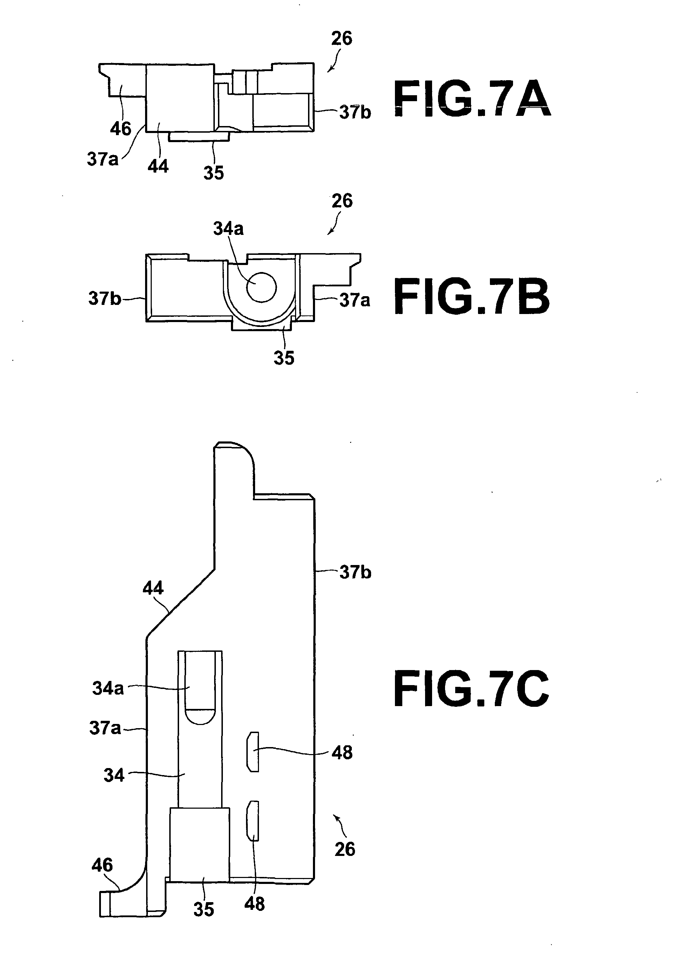

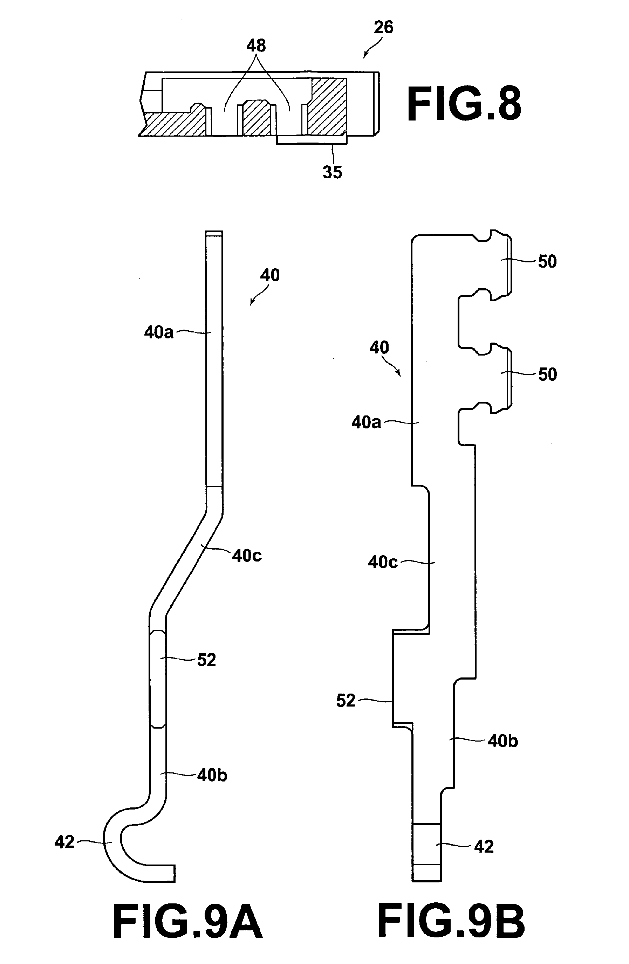

Next, the cam mechanism 18 will be described with reference also to Figures 6A to 8. Figures 6A to 6C, and Figures 7A to 7C illustrate a slider 26, in which Figure 6A is a left side view, Figure 6B is a plan view, Figure 6C is a right side view, Figure 7A is a front view, Figure 7B is a rear view, and Figure 7C is a bottom view. Figure 8 is a partial cross-sectional view taken along the line 8-8 in Figure 6B. As illustrated in Figure 4, the cammechanism 18 includes a slider 26 that slides in forward-backward directions within a broad groove 24 which is formed in the housing 2 and extending in the forward-backward direction. One end 28a of a metal rod (positioning member) 28 with both ends bent in parallel is swingably inserted in a hole 30 formed in a direction orthogonal to the bottom wall 20 at the front end portion of the housing 2. The rod 28 is pressed toward the hole 30 by the elastic tongue 74 of the shell 10, and thereby the rod 28 is prevented from getting out of the hole 30. An opening 32 extending in the forward-backward direction is formed in the rear side of the groove 24 of the housing 2. A forward oriented columnar protrusion 32a is formed at the rear end of the opening 32a. A compression coil spring 36 is disposed between the columnar protrusions 32a and 34a in a compressed state, and the slider 26 is constantly urged in the forward direction, i.e., the ejection direction of the card 100. In the mean time, the slider 26 includes a backward oriented opening 34 aligned with the opening 32, and the backward oriented other columnar protrusion 34a is formed at the front edge of the opening 34.

The slider 26 includes a side faces 37a, 37b, which are slidably brought into contact with the groove 24 of the housing 2, and thereby the slider 26 moves within the groove 24 in the forward-backward directions. The slider 26 includes a convex portion 35, which slides within the opening 32 of the housing 2, protrudingly formed at the rear bottom face thereof to ensure smooth sliding of the slider 26.

The slider 26 includes a ring-shaped cam groove 38 between the side wall 9a of the housing 2 (Figure 4) forming the groove 24 and opening 34. The cam groove 28 will be described in detail later. The other end 28b of the rod 28 described above is disposed in the cam groove 28, and moves within the cam groove 38 along with the forward-backward movement of the slider 26. That is, the other end 28b functions as a cam follower. Further, a lock spring 40 is disposed between the cam groove 38 and opening 34 along and adjacent to the cam groove 38. In Figures 6A to 6C, and Figures 7A to 7C, the lock spring 40 is omitted for clarity.

The lock spring 40 will now be described with reference also to Figures 9A, 9B. Figure 9A is a plan view of the lock spring 40, and Figure 9B is a side view thereof. The plate-like lock spring 40 integrally includes a rear portion 40a, front portion (free end portion) 40b, and transition portion 40c connecting the rear and front portions 40a, 40b. The rear portion 40a and front portion 40b are displaced with each other in the horizontal direction, but they are straight and parallel with each other in planar view. In the front portion 40b of the lock spring 40, a lock protrusion 42 is formed by folding the plate material of the lock spring 40 inwardly so as to swell outwardly. In the rear portion (fixing end) 40a, a pair of downwardly protruding tongues 50, 50 is provided, which is press fitted to the housing 2. In the mean time, a lock protrusion 52, which is protruding upward, is provided in the front portion 40b adjacent to the transition portion 40c. The lock protrusion 52 is placed at the left end of the opening 72 of the shell 10 (Figure 1) when the lock spring 40 is attached to the slider 26.

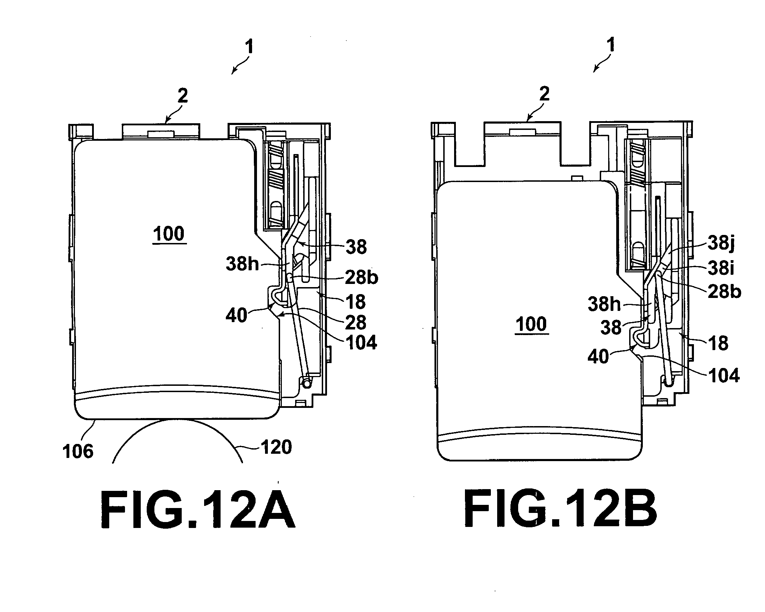

The rear portion 40a of the lock spring 40 is fixed in fixing holes 48 (Figure 6B) and front portion thereof is a free end portion (Figure 4). The inwardly oriented lock protrusion 42 of the front portion 40b is provided for locking the inserted card 100 (Figures 11A to 11C, and Figures 12A, 12B) . When the lock spring 40 is fixed in the manner as described above, the front portion 40b and transition portion 40c are placed along and adjacent to the cam groove 38. The lock spring 40 has a function to guide the rod 28 moving in the cam groove 38 such that the other end 28b thereof does not get out of the groove 38. In other words, lock spring 40 forms a portion of the wall of the cam groove 38. That is, the lock spring 40 is structured so as to be placed adjacent to a portion of the cam groove 38. Accordingly, the cam groove 38 may be formed shallow, and so may be the slider 26 by that amount. Inner face of the slider 26 includes an inclined surface 44 along the outer shape of a card to be inserted and a forward oriented abutting surface 46 formed separately in the forward-backward direction. The inclined surface 44 is provided on the inner face of the slider 26 closer to the front end portion thereof, and the abutting surface 46 is provided on the inner surface of the slider 26 at the rear end portion thereof. The inserted card is abutted to the abutting surface 46 and moves the slider 26 backward while biasing the slider 26. When pushed by the card 100, the slider 26 constructed in the manner as described above moves backward along with the lock spring 40 and cam groove 38, while compressing the compression coil spring 36. This will be described in detail later.

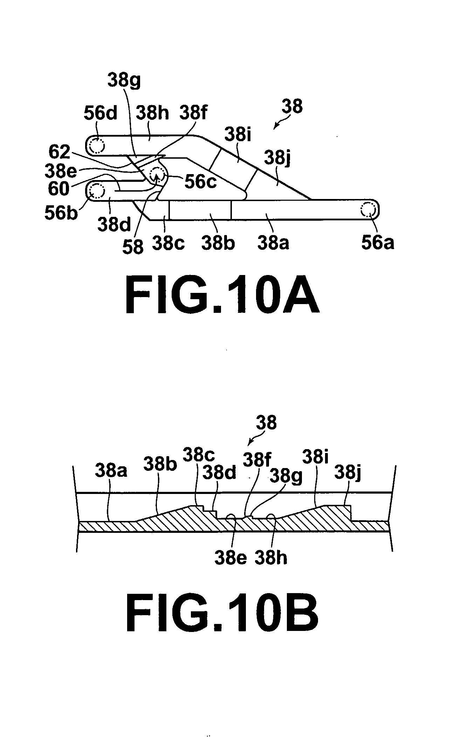

Next, the cam groove 38 will be described with reference to Figures 10A, 10B. Figure 10A is a plan view of the cam groove 38, and Figure 10B is a cross-sectional development view thereof. Roughly, the cam groove 38 has an elongated heart shape. The other end 28b of the rod 28 described above is disposed in the cam groove 38 and moves clockwise. For this reason, the cam groove 38 includes a plurality of steps for preventing the reverse rotation. Hereinafter, the bottom shape of the cam groove 38 having the steps will be described.

The cam groove 38 includes a lowest (deepest) linear section 38a located in the back end, a slope 38b rising from the section 38a, and a flat section 38c continuing from the top of the slope 38b. These sections 38a, 38b, and 38c are on a straight line. The section 38c is followed by a section 38d which is displaced inwardly and lower than the section 38c by a step. The section 38d is located in the front end of the cam groove 38 and extends in the forward-backward direction in parallel with the section 38a. The section 38d is followed by a flat section 38e which is lower than the section 38d through a step. The section 38e is followed by a slope 38f rising from the section 38e, and then by a short flat section 38g. The section 38g is slightly higher than the section 38e. The section 38g is followed by a low flat section 38h through a step. The section 38h has the same height as the section 38e. The section 38h is followed by a rising slope 38i, and then by a flat section 38j. Then, from the flat section 38j, the bottom shape of the cam groove 38 returns to the lowest section 38a through a step.

In this way, the other end 28b of the rod 28 moves in the cam groove 38 clockwise from a high section to a low section and from a low section to a high section through a slope. Accordingly, the other end 28b of the rod 28 is movable only clockwise. If the other end 28b of the rod 28 tries to move counterclockwise, the movement is prevented by the steps of the cam groove 38. Further, the sections 38h, 38i are guided by the front portion 40b and transition portion 40c of the lock spring 40 as illustrated in Figure 4.

An operation of the cam mechanism 18, when the card 100 is inserted, for use, into the card connector 1 constructed in the manner as described above, will be described with reference to Figures 11A to 11C, and Figures 12A, 12B. Figure 11A is a plan view of the card connector 1, illustrating a state in which the card 100 is inserted into the connector 1 and provisionally locked by the lock spring 40. Figure 11B is a plan view of the card connector 1, illustrating a state in which the card 100 is inserted all the way into the connector 1. Figure 11c is a plan view of the card connector 1, illustrating a state in which a finger pushing the card 100 is removed from the inserted card 100, and the card 100 becomes usable. Note that the shell 10 is omitted from these drawings. Figure 12A is a plan view of the card connector 1, illustrating a state in which the card in usable state is pushed again by a finger. Figure 12B is a plan view of the card connector 1, illustrating a state in which the card 100 is pushed back to a position where the card 100 is allowed to be pulled out. Here also, note that the shell 10 is omitted.

First, the shape of the card 100 will be described with reference to Figure 11A. The card 100 has substantially a plate-like rectangular shape, with a narrow front portion 100a and a broad rear portion 100b, which is wider than the front portion 100a. Here, the "front portion" means the fore side of the card 100 toward the card insertion direction 101, and "rear portion" means the side of the card 100 pushed by a finger. A notch-like lock concave portion 104 is formed on the side face 102 facing the cam mechanism 18 in the rear portion of the card 100. The lock concave portion 104 includes a lock face 104a facing the rear end 106 of the card 100. Further, a slope 108 is formed on the side face 102 as a transition portion between the rear portion 100b and front portion 100a. A corner 110 of the card 100 has a mutually complementary arc-shape with the abutting surface 46 of the slider 26 so as to abut to the arc-shaped abutting surface. In this way, the card 100 is formed in left-right asymmetric, and the slider 26 has a shape corresponding to the shape of the card 100, so that the card 100 can not be inserted into the card connector by reversing the left and right, and thereby erroneous insertion may be prevented.

When the card 100 formed in the manner as described above is inserted into the card insertion slot 12 (Figures 1A, 1B) of the card connector 1, the front portion 100a of the card 100 is inserted into the card receiving section 54, and the lock spring 40 is deformed as illustrated by an imaginary line by running on the slope 108, then snappingly returns to the original shape at the position of the lock concave portion 104, thereby the lock protrusion 42 engages with the lock concave portion 104, as illustrated in Figure 11A. Here, the slider 26 is not moved yet, and the lock protrusion 52 of the lock spring 40 is not moved into the slot 56 (Figure 1A) of the shell 10. Under this state, the lock spring 40 may bend outward as illustrated by an imaginary line. Thus, if the card 100 is pulled in the direction opposite to the insertion direction 101, the lock spring 40 is bent and the engagement is released, thereby the card may be pulled out. That is, the state illustrated in Figure 11A may be referred to as a state in which the card 100 is provisionally locked. Here, the other end 28b of the rod 28 is located in a rear end position 56a of the section 38a of the cam groove 38 (Figure l0A) .

Then, if the card 100 is inserted all the way into the card receiving section 54 by pushing the rear end of the card 100 with a finger, as illustrated in Figure 11B, the slider 26 is pushed by the card 100, and moved to the rear portion of the card connector 1 against the elastic force of the compression coil spring 36. Here, the positional relationship between the lock spring and cam groove 38 is not changed from that illustrated in Figure 11A. In the mean time, the other end 28b of the rod 28 is moved to a front end position 56b of the section 38d (Figure 10A) through the sections 38a, 38c.

Under this state, if a finger 120 is removed, the slider 26 is pushed back in the direction opposite to the insertion direction 101 by the elastic force of the compression coil spring 36, as illustrated in Figure 11c. The other end 28b of the rod 28 is moved as illustrated by the arrow 60 (Figure 10A) guided by the wall 58 of the cam groove 38, and stopped at the position 56c. Here, a not shown electrode of the card 100 is brought into contact with the contact segment 4a of the contact 4, and thereby the card 100 is electrically connected to the card connector 1. That is, the card 100 becomes usable. Further, the lock protrusion 52 of the lock spring 40 is placed in the slot 56 of the shell 10, so that the lock spring 40 is prevented from elastically deforming in the left-right directions. Accordingly, the engagement of the card 100 with the lock spring 40 is securely maintained.

Next, an operation of the cam mechanism 18, when the card 100 is removed from the card connector 1, will be described with reference to Figures 12A, 12B. As illustrated in Figure 12A, when the rear end 106 of the card 100 is pushed by the finger 120 again, the other end 28b of the rod 28 is moved to a position 56d of the section 38h guided by the wall 62 (Figure l0A) . Then, if the finger 120 is removed from the card 100, the other end 28b of the rod 28 is returned to the section 38a through the sections 38h, 38i and 38j, as illustrated in Figure 12B. Figure 12B illustrates a state in which the other end 28b of the rod 28 is on its way back to the section 38a. At the final position of the other end 28b of the rod 28, i.e., at the position 56a, the lock protrusion 52 of the lock spring 40 gets out of the slot 56 and the lock spring 40 becomes bendable in the left-right directions, so that the card 100 may be pulled out.

Here, an important fact is that when the other end 28b of the rod 28 moves along the rear end portion of the section 38h and the section 38i, which form an angle with the insertion direction 101 of the card 100, the longitudinal axis of the rod 28 forms a relatively large angle with these portions, but the other end 28b of the rod 28 does not get out of the cam groove 38, since the other end 28b is guided by a planar face of the lock spring 40, as illustrated in Figures 12A, 12B. Further, the movement of the rod 28 is not hindered by the lock spring 40 even though the rod 28 and lock spring 40 are disposed in extremely close proximity with each other. Accordingly, the cam mechanism 18 may be formed narrow in width. Another important fact is that the cam mechanism 38 and lock spring 40 are incorporated in the slider 26, and the card 100 and slider 26 lie within substantially the same plane. This allows the thickness of the housing 2 to be reduced, and thereby the height of the card connector 1 may be reduced.

## Claims

1. A card connector comprising: a contact; an insulative housing for holding the contact; and a push-push cam mechanism provided in the housing and driven along insertion-removal directions of a card by a push operation of the card,
wherein: the cam mechanism includes a slider having a lock spring for locking a card inserted into the housing and a cam groove; and the housing includes a positioning member swingably provided in the housing and engaging in the cam groove to perform positioning of the slider according to the push operation of the card, and
wherein: the slider lies within substantially the same plane as the card; and the lock spring is disposed adjacent to the cam groove to guide the positioning member.

2. The card connector according to claim 1, wherein: the lock spring has a plate-like shape and includes a lock protrusion for locking the card at a free end portion thereof; a fixing end portion of the lock spring is fixed to the slider; and a planar surface of the lock spring adjacently faces a portion of the cam groove.

3. The card connector according to claim 2, wherein: the connector further comprises a shell that substantially covers the housing and cam mechanism, the shell having, on a principal surface thereof corresponding to the cam mechanism, a slot extending in the insertion-removal directions of the card; and the lock spring includes a lock protrusion that engages with the slot to control movement of the free end portion when the slider is pushed into the housing and the card is placed at a usable position.
